# EUROPÄISCHE PATENTSCHRIFT

(11) **EP 1 607 555 B1**
(45) Veröffentlichungstag und Bekanntmachung des Hinweises auf die Patenterteilung: **23.04.2008**
(21) Anmeldenummer: 05004528.5
(22) Anmeldetag: 02.03.2005
(51) Int. Cl.: E05B 65/12, B60R 22/34

(54) **Türaussengriff für ein Fahrzeug**
Outer door handle for a vehicle
Poignée de porte extérieure pour véhicule

(30) Priorität: 15.05.2004 DE 102004024288
(43) Veröffentlichungstag der Anmeldung: 21.12.2005
(73) Patentinhaber: Dr.Ing. h.c. F. Porsche Aktiengesellschaft, 70435 Stuttgart (DE)
(72) Erfinder: Metzler, Jürgen, 76571 Gaggenau (DE); Klamser, Herbert, 71120 Grafenau (DE); Kusche, Jörg, 75248 Oelbronn-Duerrn (DE)

(56) Entgegenhaltungen:
- EP-A- 1 187 962
- EP-A- 1 207 257
- EP-A- 1 243 724
- DE-A1- 2 023 859

## Beschreibung

Die Erfindung betrifft einen Türaußengriff für ein Fahrzeug gem. dem Oberbegriff des Patentanspruchs 1.

Aus der DE 20 23 859 C3 geht ein Türaußengriff für ein Fahrzeug hervor, der mit einem Türschloss in Wirkverbindung steht und ein schwenkbar gelagertes Griffteil aufweist, wobei zum Verhindern eines ungewollten Öffnens der Tür bei einem Seitenaufprall am Türaußengriff ein mit einer Zusatzmasse und einer Rückstellfeder versehener zweiarmiger Hebel vorgesehen ist, dessen einer Arm die Zusatzmasse aufnimmt und dessen anderer Arm mit dem Griffteil zusammenwirkt.

Bei einem Seitenaufprall bewirkt die Zusatzmasse eine entsprechend den Hebelarmen übersetzte Trägheitskraft, die der auf das Griffteil wirkenden Trägheitskraft entgegengerichtet ist und ein ungewolltes Öffnen der Tür verhindern soll.

Es hat sich herausgestellt, dass bei einer derartigen Anordnung bei einem auf die Tür einwirkenden Seitenaufprall unter ungünstigen Bedingungen z.B. bei einem schräg gerichteten Aufprallstoß hochfrequente Schwingungsbewegungen am Türaußenblech im Bereich des Türaußengriffes auftreten können, die zu einem unerwünschten Verschwenken des die Zusatzmasse aufnehmenden Hebels und in weiterer Folge zu einem Entriegeln des Türschlosses bzw. zum Öffnen der Tür führen können.

Aufgabe der Erfindung ist es, einen Türaußengriff der eingangs genannten Gattung so weiterzubilden, dass bei einem Seitenaufprall auch unter ungünstigen Bedingungen stets sichergestellt ist, dass die Tür während des Seitenaufpralles geschlossen bleibt, sich jedoch nach dem Seitenaufprall wieder problemlos öffnen lässt.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, dass durch die Anordnung einer eine Seitenaufprall bedingte Schwenkbewegung des zweiarmigen Hebels in Pfeilrichtung S begrenzenden Vorrichtung ein Entriegeln des Türschlosses während des Seitenaufpralles zuverlässig verhindert und somit ein ungewolltes Öffnen der Tür vermieden wird. Die Vorrichtung kann elektrisch, hydraulisch, pneumatisch oder dgl. ausgebildet sein.

Eine aus einem Nehmerzylinder, einem ausfahrbaren federbeaufschlagten Sperrbolzen, einer Leitung und einer druckerzeugenden Einrichtung bestehende pneumatische Vorrichtung weist einen einfachen Aufbau auf und benötigt nur einen geringen Bauraum. Als Wirkmedium wird vorzugsweise ein Gas, z.B. Luft oder eine Flüssigkeit verwendet. Bei einer pneumatischen Vorrichtung erfolgt das Ausfahren des Sperrbolzens und damit die Begrenzung der Schwenkbewegung des zweiartigen Hebels nur kurzzeitig. Dies hat den Vorteil, dass der Sperrbolzen selbsttätig wieder in seine eingefahrene Ruhelage bewegt wird, so dass sich nach erfolgtem Seitenaufprall die Tür wieder gewollt öffnen lässt.

Ein Ausführungsbeispiel der Erfindung ist in der Zeichnung dargestellt und wird im Folgenden näher erläutert.
Es zeigt
- Fig. 1: eine Teilseitenansicht auf ein Fahrzeug mit zumindest einer Seitentür und einem Türaußengriff,
- Fig. 2: einen Schnitt nach der Linie II-II der Fig. 1 in größerer Darstellung,
- Fig. 3: einen Schnitt nach der Linie III-III der Fig. 1 in größerer Darstellung.

Ein durch einen Personenwagen gebildetes Fahrzeug 1 weist auf jeder Fahrzeuglängsseite zumindest eine seitliche Tür 2 auf, an der ein Türaußengriff 3 vorgesehen ist. Der Türaußengriff 3 steht mit einem Türschloss 4 in Wirkverbindung und umfasst einen feststehenden Lagerbügel 5, ein schwenkbar gelagertes Griffteil 6 und einen Schließzylinder 7. Das Griffteil 6 wird im Ausführungsbeispiel durch einen Ziehgriff gebildet. Selbstverständlich könnte das Griffteil 6 auch durch einen Klappgriff gebildet werden.

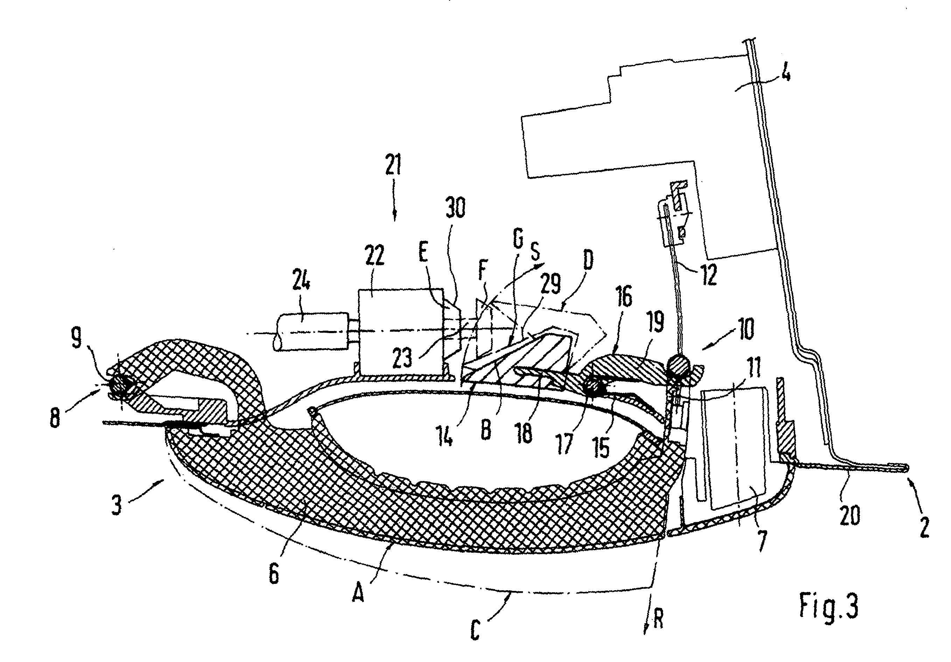

Gemäß Fig. 3 ist ein Ende 8 des Griffteiles 6 um eine aufrechte Achse 9 des Lagerbügels 5 schwenkbar gelagert. Das andere Ende 10 des Griffteiles 6 weist einen in den Innenraum der Tür 2 ragenden Griffhaken 11 auf, der über ein Übertragungselement 12, z.B. einen Bowdenzug, mit einem Außenbetätigungshebel 13 des Türschlosses 4 verbunden ist.

Zum Verhindern eines ungewollten Öffnens der Tür während eines Seitenaufpralls (Aufprallstoß in Richtung P) ist am Lagerbügel 5 des Türaußengriffes 3 ein mit einer Zusatzmasse 14 und einer Rückstellfeder 15 versehener zweiarmiger Hebel 16 vorgesehen, der um eine aufrechte Achse 17 schwenkbar am Lagerbügel 5 gelagert ist. Ein Arm 18 des Hebels 16 nimmt die durch einen keilförmigen Körper gebildete Zusatzmasse 14 auf, wogegen der andere Arm 19 des Hebels 16 den Griffhaken 11 des Griffteiles 6 formschlüssig umschließt. Der Lagerbügel 5 ist an der Innenseite eines Türaußenblechs 20 der seitlichen Tür 2 angeordnet und örtlich am Türaußenblech 20 befestigt (nicht näher dargestellt).

In Schließstellung der Tür 2 ist das Türschloss 4 verriegelt und das Griffteil 6 nimmt eine Ruhelage A ein, wobei die am Lagerbügel 5 und am Arm 19 des Hebels 16 angreifende Rückstellfeder 15 den Hebel 16 dergestalt beaufschlagt, dass das Griffteil 6 nach innen in Richtung Türaußenblech 20 gezogen wird. Der Hebel 16 nimmt in der Schließstellung der Tür 2 eine Position B ein, in der eine Außenseite der Zusatzmasse 14 etwa parallel zum angrenzenden Lagerbügel 5 ausgerichtet ist.

Zum Öffnen der Tür 2 wird das Griffteil 6 um die Achse 9 in Pfeilrichtung R nach außen in eine Betätigungslage C verschwenkt. Durch die formschlüssige Verbindung zwischen dem Hebel 16 und dem Griffhaken 11 wird der Hebel 16 entsprechend Fig. 3 in Pfeilrichtung S in eine Stellung D bewegt (Richtung Tür öffnen).

In der Betätigungslage C des Griffteiles 6 wird über das Übertragungselement 12 der Außenbetätigungshebel 13 des Türschlosses 4 verlagert und das Türschloss 4 wird entriegelt.

Das Griffteil 6 und der Hebel 16 sind lediglich in Öffnungsrichtung des Griffteiles 6, das heißt, bei einer Schwenkbewegung des Griffteiles 6 in Pfeilrichtung R miteinander gekoppelt, nicht jedoch in entgegengesetzter Richtung. Das bedeutet, dass der Hebel 16 unabhängig vom Griffteil 6 eine Schwenkbewegung in Pfeilrichtung S ausführen kann.

Unter ungünstigen Bedingungen können bei einem Seitenaufprall auf die Tür 2 hochfrequente Schwingungsbewegungen am Türaußenblech 20 im Bereich des Türaußengriffs 3 auftreten, die zu einem unerwünschten Verschwenken des Hebels 16 in Pfeilrichtung S und in weiterer Folge zu einem Verschwenken des Griffteiles 6 in Pfeilrichtung R führen, wodurch das Türschloss 4 entriegelt würde.

Zur Vermeidung dieser Problematik ist erfindungsgemäß vorgesehen, dass eine seitenaufprallbedingte Schwenkbewegung des zweiarmigen Hebels 16 in Pfeilrichtung S durch eine Vorrichtung 21 dergestalt begrenzt ist, dass ein Verriegeln des Türschlosses 4 verhindert wird.

Die Vorrichtung 21 kann elektrisch, hydraulisch, pneumatisch oder dgl. ausgebildet sein. Im Ausführungsbeispiel ist eine pneumatisch wirkende Vorrichtung 21 dargestellt, die einen am feststehenden Lagerbügel 5 des Türaußengriffes 3 angebrachten Nehmerzylinder 22 mit einem ausfahrbaren, federbeaufschlagten Sperrbolzen 23 umfasst, wobei der Nehmerzylinder 22 bzw. der Sperrbolzen 23 über eine feste oder flexible Leitung 24 mit einer druckerzeugenden Einrichtung 25 verbunden sind.

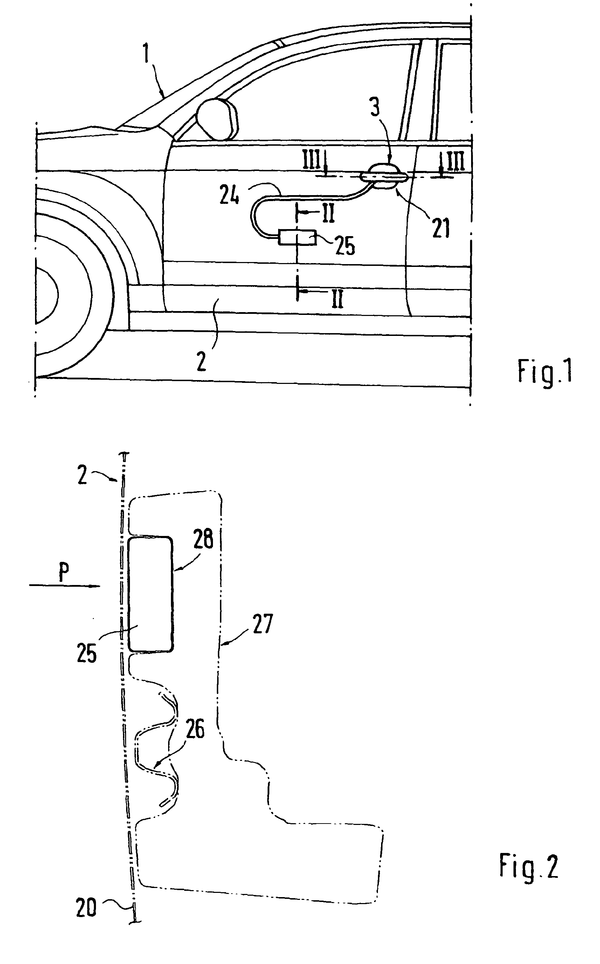

Die druckerzeugende Einrichtung 25 wird durch eine Druckdose, einen teleskopartig zusammenschiebbaren Aktuator oder dgl. gebildet. Gemäß Fig. 2 ist die Einrichtung 25 innerhalb der Tür 2 und zwar benachbart der Innenseite des Türaußenblechs 20 angeordnet. Oberhalb einer inneren Türleitplanke 26 ist an einem innenliegenden Schaumteil 27 eine Aufnahme 28 für die druckerzeugende Einrichtung 25 vorgesehen.

Bei einem seitlichen Aufprallstoß auf die Tür 2 verformt sich das Türaußenblech 20 und gelangt in Kontakt mit der Außenseite der druckerzeugenden Einrichtung 25 (nicht näher dargestellt). Diese wird in Fahrzeugquerrichtung komprimiert und baut innerhalb der Vorrichtung 21 einen Druck auf, wodurch der Sperrbolzen 23 von seiner eingefahrenen Stellung E in eine ausgefahrene Stellung F verlagert wird, in der er in Kontakt mit einer schräg verlaufenden Fläche 29 der Zusatzmasse 14 gelangt und somit die Schwenkbewegung des Hebels 16 in einer Stellung G begrenzt.

Als Wirkmedium für die Vorrichtung 21 ist im Ausführungsbeispiel ein Gas wie z.B. Luft vorgesehen. Selbstverständlich könnte auch eine Flüssigkeit als Wirkmedium Verwendung finden. Vorzugsweise erfolgt das Ausfahren des Sperrbolzens 23 in die ausgefahrene Stellung F nur kurzzeitig, wobei durch langsames Entweichen des komprimierten Wirkmediums aus dem Nehmerzylinder 22 der federbelastete Sperrbolzen 23 wieder in seine eingefahrene Stellung E zurückbewegt wird, um ein gewolltes Öffnen der Tür 2 nach dem Seitenaufprall zu ermöglichen.

Das freie Ende 30 des Sperrbolzens 23 weist im Ausführungsbeispiel eine kegelstumpfförmige Abschrägung auf.

## Patentansprüche

1. Türaußengriff (3) für ein Fahrzeug (1), der mit einem Türschloss (4) in Wirkverbindung steht und ein an einem feststehenden Lagerbügel (5) gelagertes Griffteil (6) umfasst, wobei zum Verhindern eines ungewollten Öffnens einer Tür (2) während eines Seitenaufpralls am Lagerbügel (5) ein mit einer Zusatzmasse (14) und einer Rückstellfeder (15) versehener zweiarmiger Hebel (16) schwenkbar gelagert ist, der lediglich in Öffnungsrichtung des Griffteiles (6) mit diesem gekoppelt ist, **dadurch gekennzeichnet, dass** bei einem auf die Tür (2) einwirkenden Seitenaufprall eine zusätzliche Vorrichtung (21) mit der Zusatzmasse (14) des zweiarmigen Hebels (16) in Wirkverbindung gelangt, wodurch eine Schwenkbewegung des zweiarmigen Hebels (16) in Pfeilrichtung (S) dergestalt begrenzt ist, dass ein Entriegeln des Türschlosses (4) verhindert wird.

2. Türaußengriff nach Anspruch 1, **dadurch gekennzeichnet, dass** die Vorrichtung (21) elektrisch, hydraulisch, pneumatisch oder dgl. ausgebildet ist.

3. Türaußengriff nach den Ansprüchen 1 und 2, **dadurch gekennzeichnet, dass** eine pneumatisch wirkende Vorrichtung (21) vorgesehen ist, die einen an einem feststehenden Lagerbügel (5) des Türaußengriffes (3) angebrachten Nehmerzylinder (22) mit einem ausfahrbaren, federbeaufschlagten Sperrbolzen (23) umfasst, wobei der Nehmerzylinder (22) bzw. der Sperrbolzen (23) über eine Leitung (24) mit einer druckerzeugenden Einrichtung (25) verbunden sind.

4. Türaußengriff nach Anspruch 3, **dadurch gekennzeichnet, dass** die druckerzeugende Einrichtung (25) durch eine Druckdose, einen teleskopartig zusammenschiebbaren Aktuator oder dgl. gebildet wird, wobei die Einrichtung (25) innerhalb der Tür (2) benachbart des Türaußenblechs (20) angeordnet ist.

5. Türaußengriff nach einem der vorangegangenen Ansprüche, **dadurch gekennzeichnet, dass** die Zusatzmasse (14) eine Schrägfläche (29) aufweist, die bei einem auf die Tür (2) einwirkenden Seitenaufprall in Kontakt mit dem freien Ende (30) des ausgefahrenen Sperrbolzens (23) gelangt.

6. Türaußengriff nach einem der vorangegangenen Ansprüche, **dadurch gekennzeichnet, dass** als Wirkmedium für die Vorrichtung (21) vorzugsweise ein Gas, wie z.B. Luft vorgesehen ist.

7. Türaußengriff nach einem der vorangegangenen Ansprüche, **dadurch gekennzeichnet; dass** das Ausfahren des Sperrbolzens (23) nur kurzzeitig erfolgt und dass das komprimierte Wirkmedium durch zumindest eine Öffnung des Nehmerzylinders (22) langsam entweichen kann.

## Claims

1. Outer door handle (3) for a vehicle (1), which is operatively connected to a door lock (4) and comprises a handle part (6) which is mounted on a fixed bearing bracket (5), wherein, in order to prevent inadvertent opening of a door (2) during a side impact, a two-armed lever (16) which is provided with an additional mass (14) and a resetting spring (15) is mounted pivotably on the bearing bracket (5) and is coupled to the handle part (6) only in the opening direction thereof, **characterized in that**, in the event of a side impact acting on the door (2), an additional device (21) comes into operative connection with the additional mass (14) of the two-armed lever (16), as a result of which a pivoting movement of the two-armed lever (16) in the arrow direction (S) is restricted to the effect that unlocking of the door lock (4) is prevented.

2. Outer door handle according to Claim 1, **characterized in that** the device (21) is designed electrically, hydraulically, pneumatically or the like.

3. Outer door handle according to Claims 1 and 2, **characterized in that** a pneumatically acting device (21) is provided, the device comprising a slave cylinder (22), which is fitted to a fixed bearing bracket (5) of the outer door handle (3) and has an extendible, spring-pressurized locking pin (23), the slave cylinder (22) and the locking pin (23) being connected to a pressure-generating apparatus (25) via a line (24).

4. Outer door handle according to Claim 3, **characterized in that** the pressure-generating apparatus (25) is formed by a pressure capsule, an actuator which can be pushed together telescopically, or the like, with the apparatus (25) being arranged within the door (2) adjacent to the outer door panel (20).

5. Outer door handle according to one of the preceding claims, **characterized in that** the additional mass (14) has an oblique surface (29) which, in the event of a side impact acting on the door (2), comes into contact with the free end (30) of the extended locking pin (23).

6. Outer door handle according to one of the preceding claims, **characterized in that** a gas, such as, for example, air, is preferably provided as the operative medium for the device (21).

7. Outer door handle according to one of the preceding claims, **characterized in that** the extension of the locking pin (23) only takes place briefly, and **in that** the compressed operative medium can escape slowly through at least one opening of the slave cylinder (22).

## Revendications

1. Poignée extérieure de portière (3) pour un véhicule (1) qui est en liaison active avec une serrure de portière (4) et comprend une partie poignée (6) montée sur un étrier support (5) fixe, un levier (16) à deux branches muni d'une masse supplémentaire (14) et d'un ressort de rappel (15) étant monté de manière à pouvoir pivoter sur l'étrier support (5) pour empêcher une ouverture non désirée d'une portière (2) pendant une collision latérale, lequel n'étant couplé à la partie poignée (6) que dans le sens de l'ouverture de celle-ci, **caractérisée en ce que** dans le cas d'une collision latérale agissant sur la portière (2), un dispositif supplémentaire (21) entre en liaison active avec la masse supplémentaire (14) du levier (16) à deux branches, ce qui limite un mouvement de pivotement du levier (16) à deux branches dans le sens de la flèche (S) de telle sorte qu'un déverrouillage de la serrure de portière (4) soit empêché.

2. Poignée extérieure de portière selon la revendication 1, **caractérisée en ce que** le dispositif (21) est électrique, hydraulique, pneumatique ou similaire.

3. Poignée extérieure de portière selon les revendications 1 ou 2, **caractérisée en ce qu'**il est prévu un dispositif (21) à effet pneumatique qui comprend un cylindre récepteur (22) monté sur un étrier support (5) fixe de la poignée extérieure de portière (3) et doté d'un goujon de blocage (23) extractible monté sur ressort et, le cylindre récepteur (22) ou le goujon de blocage (23) étant relié par le biais d'une conduite (24) avec un dispositif générateur de pression (25).

4. Poignée extérieure de portière selon la revendication 3, **caractérisée en ce que** le dispositif générateur de pression (25) est formé par une capsule sous pression, un actionneur coulissant de manière télescopique ou similaire, le dispositif (25) étant installé à l'intérieur de la portière (2) à côté de la tôle extérieure (20) de la portière.

5. Poignée extérieure de portière selon l'une des revendications précédentes, **caractérisée en ce que** la masse supplémentaire (14) présente une face inclinée (29) qui, en cas de collision latérale agissant sur la portière (2), entre en contact avec l'extrémité libre (30) du goujon de blocage (23) sorti.

6. Poignée extérieure de portière selon l'une des revendications précédentes, **caractérisée en ce que** le fluide actif prévu pou le dispositif (21) est de préférence un gaz comme, par exemple, de l'air.

7. Poignée extérieure de portière selon l'une des revendications précédentes, **caractérisée en ce que** la sortie du goujon d'arrêt (23) n'a lieu que pendant un court instant et que le fluide actif comprimé peut s'échapper lentement à travers au moins une ouverture du cylindre récepteur (22).
